# EUROPEAN PATENT APPLICATION

(11) **EP 4 099 622 A1**
(43) Date of publication of application: **07.12.2022**
(21) Application number: 22172961.9
(22) Date of filing: 12.05.2022
(51) Int. Cl.: H04L 9/40, G06F 21/33

(54) **TRAINING OF AI / ML BASED MODELS WITH OPERATOR DATA**

(30) Priority: 04.06.2021 EP 21177686
(71) Applicant: Nokia Technologies Oy, 02610 Espoo (FI)
(72) Inventor: TANG, Haitao, Espoo (FI); MWANJE, Stephen, Dorfen (DE)
(74) Representative: Nokia EPO representatives

(57) **Abstract**

A training application (TrApp) is configured to train an AI/ML based model; sending to a license management function (LiMnF) in a network a request (R1) for acquiring a license for accessing operator data generated by one or more network entities in the network; receive, from the license management function (LiMnF) in response to the request (R1) for acquiring a license, at least one license credential, wherein the license credential identifies operator data to which the training application (TrApp) is allowed to access; send at least one request (R3) for accessing operator data, the at least one request for accessing operator data including the at least one license credential; receive in response to the at least one request (R3) for accessing operator data the operator data to which the training application (TrApp) is allowed to access. The AI/ML based model may be trained using received operator data as training data.

## Description

### TECHNICAL FIELD

Various example embodiments relate generally to methods and apparatuses for training Artificial Intelligence (Al) / Machine Learning (ML) based models with operator data.

### BACKGROUND

Open Radio Access Network (O-RAN) is designed for Fifth generation (5G) wireless networks. O-RAN seeks to supplant hardware-specific Radio Access Network (RAN) components (e.g., the mobility management entity (MME) or base station (gNB)) with generic hardware, specialized software, and open signaling interfaces. The virtualization and network slicing features of 5G allow for software to replace previously hardware specific functions. Software further provides faster analytics, thus supporting 5Gs latency requirements and advanced usage scenarios. Furthermore, as software annexes control of the RAN, there is freedom to integrate Artificial Intelligence (Al) / Machine Learning (ML) algorithms into RAN management.

Machine learning is a field of study that provides computers the ability to learn without being explicitly programmed. The ability to learn useful information from input data can help improve RAN or network performance. For example, convolutional neural networks and recurrent neural networks can extract spatial features and sequential features from time-varying signal strength indicators.

In this context, the network operators and Al / ML vendors that design ML-based solution have to cooperate. For example, to solve a given network ML-based usecase, it often requires that a vendor designs an ML-based solution which then needs to be trained with adequate operator data before the ML-based solution can be used in any network.

However, the vendor usually has insufficient data for adequate training of the ML-based solutions. This leads to the likelihood that a sub-optimal ML-based solution may be deployed to an operator's network, besides the fact that the ML model cannot be updated with continuous variation in the network situation over time. On the other hand, the operator has the data in the required volume, veracity, and variability for its network operation use cases.

It is desirable to provide operator supported solutions to enable a vendor application to get access to the relevant operator data in an efficient and secure manner.

### SUMMARY

The scope of protection is set out by the independent claims. The embodiments, examples and features, if any, described in this specification that do not fall under the scope of the protection are to be interpreted as examples useful for understanding the various embodiments or examples that fall under the scope of protection.

According to a first aspect, a method comprises: executing a training application configured to train at least one AI / ML based model; sending to a license management function in a network a request for acquiring a license for accessing operator data generated by one or more network entities in the network; receiving, from the license management function in response to the request for acquiring a license, at least one license credential, wherein the license credential identifies operator data to which the training application is allowed to access; sending to a data management function in the network at least one request for accessing operator data, the at least one request for accessing operator data including the license credential; receiving, from the data management function in response to the at least one request for accessing operator data, the operator data to which the training application is allowed to access; training the at least one AI/ML based model by the training application using received operator data.

The license credential may include information on a period of validity of the license. The license credential may include at least one identifier of a target data object instance to which the training application is allowed to access. The license credential may include at least one identifier of a target attribute of the target data object instance to which the training application is allowed to access. The at least one request for accessing operator data may include authentication data to allow the authentication of the training application by the data management function. The request for acquiring a license may include at least one identifier of a target data object instance to which the training application is requesting access and the license credential may include at least one identifier of a target data object instance to which the training application is allowed to access. The request for acquiring a license may include at least one identifier of a target attribute of the data object instance to which the training application is requesting access and the license credential may include at least one identifier of a target attribute of the data object instance to which the training application is allowed to access.

The method according to the first aspect may further comprise: sending, to a repository in the network, a request for data source identifier, wherein the request for data source identifier includes at least one identifier of a target data object instance and / or at least one identifier of a target attribute of the data object instance to which the training application is requesting access; receiving, from the repository in response to request for data source identifier, at least one data source identifier that provides access to the operator data. The method according to the first aspect may further comprise: receiving from the license management function at least one data source identifier that provides access to the operator data. The method according to the first aspect may further comprise: sending to the license management function in a network a message for license update after receipt of the operator data to which the training application is allowed to access.

According to another aspect, an apparatus comprises at least one processor and at least one memory including computer program code. The at least one memory and the computer program code are configured to, with the at least one processor, cause the apparatus to: execute a training application configured to train at least one AI / ML based model; send to a license management function in a network a request for acquiring a license for accessing operator data generated by one or more network entities in the network; receive, from the license management function in response to the request for acquiring a license, at least one license credential, wherein the license credential identifies operator data to which the training application is allowed to access; send to a data management function in the network at least one request for accessing operator data, the at least one request for accessing operator data including the license credential; receive, from the data management function in response to the at least one request for accessing operator data, the operator data to which the training application is allowed to access; train the at least one AI/ML based model by the training application using received operator data.

Generally, the at least one memory and the computer program code are configured to, with the at least one processor, cause the apparatus to perform one or more or all steps of a method according to the first aspect as disclosed herein.

According to another aspect, an apparatus comprises: means for executing a training application configured to train at least one AI/ML based model; means for sending to a license management function in a network a request for acquiring a license for accessing operator data generated by one or more network entities in the network; means for receiving from the license management function in response to the request for acquiring a license at least one license credential, wherein the license credential identifies operator data to which the training application is allowed to access; means for sending at least one request for accessing operator data, the at least one request for accessing operator data including the license credential; means for receiving in response to the at least one request for accessing operator data the operator data to which the training application is allowed to access; wherein the means for executing the training application are configured to train the at least one AI/ML based model using the received operator data.

The license credential may include information on a period of validity of the license. The license credential may include at least one identifier of a target data object instance to which the training application is allowed to access. The license credential may include at least one identifier of a target attribute of the target data object instance to which the training application is allowed to access. The at least one request for accessing operator data may include authentication data to allow the authentication of the training application by the data management function. The request for acquiring a license may include at least one identifier of a target data object instance to which the training application is requesting access and the license credential may include at least one identifier of a target data object instance to which the training application is allowed to access. The request for acquiring a license may include at least one identifier of a target attribute of the data object instance to which the training application is requesting access and the license credential may include at least one identifier of a target attribute of the data object instance to which the training application is allowed to access.

The apparatus may further comprise: means for sending, to a repository in the network, a request for data source identifier, wherein the request for data source identifier includes at least one identifier of a target data object instance and / or at least one identifier of a target attribute of the data object instance to which the training application is requesting access; means for receiving, from the repository in response to request for data source identifier, at least one data source identifier that provides access to the operator data. The apparatus may further comprise: means for receiving from the license management function at least one data source identifier that provides access to the operator data. The apparatus may further comprise: means for sending to the license management function in a network a message for license update after receipt of the operator data to which the training application is allowed to access.

Generally, the apparatus may include means for performing one or more or all steps of a method according to the first aspect as disclosed herein.

According to a second aspect a method comprises: receiving, by a license management function in a network and from a training application configured to train at least one AI / ML based model, a request for acquiring a license for accessing operator data generated by one or more network entities in the network; sending, by the license management function in response to the request for acquiring a license, at least one license credential, wherein the license credential identifies operator data to which the training application is allowed to access.

According to another aspect, an apparatus comprises at least one processor and at least one memory including computer program code. The at least one memory and the computer program code are configured to, with the at least one processor, cause the apparatus to: receive, by a license management function in a network and from a training application configured to train at least one AI / ML based model, a request for acquiring a license for accessing operator data generated by one or more network entities in the network; send, by the license management function in response to the request for acquiring a license, at least one license credential, wherein the license credential identifies operator data to which the training application is allowed to access.

Generally, the at least one memory and the computer program code are configured to, with the at least one processor, cause the apparatus to perform one or more or all steps of a method according to the second aspect as disclosed herein.

According to another aspect, an apparatus comprises: means for receiving, by a license management function in a network and from a training application configured to train at least one AI/ML based model, a request for acquiring a license for accessing operator data generated by one or more network entities in the network; means for sending, by the license management function in response to the request for acquiring a license, at least one license credential, wherein the license credential identifies operator data to which the training application is allowed to access.

Generally, the apparatus may include means for performing one or more or all steps of a method according to the second aspect as disclosed herein.

According to a third aspect a method comprises: receiving, by a data management function in a network and from a training application configured to train at least one AI / ML based model, at least one request for accessing operator data generated by one or more network entities in the network, the at least one request for accessing operator data including at least one license credential, wherein the license credential identifies operator data to which the training application is allowed to access; sending, by the data management function in response to the at least one request for accessing operator data, the operator data to which the training application is allowed to access.

According to another aspect, an apparatus comprises at least one processor and at least one memory including computer program code. The at least one memory and the computer program code are configured to, with the at least one processor, cause the apparatus to: receive, by a data management function in a network and from a training application configured to train at least one AI / ML based model, at least one request for accessing operator data generated by one or more network entities in the network, the at least one request for accessing operator data including at least one license credential, wherein the license credential identifies operator data to which the training application is allowed to access; send, by the data management function in response to the at least one request for accessing operator data, the operator data to which the training application is allowed to access.

Generally, the at least one memory and the computer program code are configured to, with the at least one processor, cause the apparatus to perform one or more or all steps of a method according to the third aspect as disclosed herein.

According to another aspect, an apparatus comprises: means for receiving, by a data management function in a network and from a training application configured to train at least one AI/ML based model, at least one request for accessing operator data generated by one or more network entities in the network, the at least one request for accessing operator data including at least one license credential, wherein the license credential identifies operator data to which the training application is allowed to access; means for sending, by the data management function in response to the at least one request for accessing operator data, the operator data to which the training application is allowed to access.

Generally, the apparatus may include means for performing one or more or all steps of a method according to the third aspect as disclosed herein.

Generally, the means for performing step(s) of a method according to any aspect may include circuitry configured to perform one or more or all steps of the method according to the first, second or third aspect as disclosed herein. The means may include at least one processor and at least one memory including computer program code, wherein the at least one memory and the computer program code are configured to, with the at least one processor, cause the concerned apparatus to perform one or more or all steps of the method according to the first, second or third aspect.

At least one example embodiment provides a non-transitory computer-readable medium storing computer-executable instructions that, when executed by at least one processor at an apparatus, cause the apparatus to perform a method according to the first, second or third aspect. Generally, the computer-executable instructions may cause the concerned apparatus to perform one or more or all steps of a method according to the first, second or third aspect.

### BRIEF DESCRIPTION OF THE DRAWINGS

Example embodiments will become more fully understood from the detailed description given herein below and the accompanying drawings, which are given by way of illustration only and thus are not limiting of this disclosure.
FIG. 1 shows a block diagram of a system for training of AI/ML-based models according to an example.
FIG. 2 shows a block diagram of a system for training of AI/ML-based models according to an example.
Each of FIGS. 3A to 3D shows a flow chart of a method for training of AI/ML-based models according to examples.
FIG. 4 shows a flow chart of a method for training of AI/ML-based models according to an example.
FIG. 5 shows a block diagram of an apparatus according to an example.

It should be noted that these figures are intended to illustrate the general characteristics of methods, structure and/or apparatuses utilized in certain example embodiments and to supplement the written description provided below. These drawings are not, however, to scale and may not precisely reflect the precise structural or performance characteristics of any given embodiment, and should not be interpreted as defining or limiting the range of values or properties encompassed by example embodiments. The use of similar or identical reference numbers in the various drawings is intended to indicate the presence of a similar or identical element or feature.

### DETAILED DESCRIPTION

Various example embodiments will now be described more fully with reference to the accompanying drawings in which some example embodiments are shown.

Detailed example embodiments are disclosed herein. However, specific structural and functional details disclosed herein are merely representative for purposes of describing example embodiments. The example embodiments may, however, be embodied in many alternate forms and should not be construed as limited to only the embodiments set forth herein. Accordingly, while example embodiments are capable of various modifications and alternative forms, the embodiments are shown by way of example in the drawings and will be described herein in detail. It should be understood, however, that there is no intent to limit example embodiments to the particular forms disclosed.

In one or more embodiments, a training application acquires permission to access any relevant data of a network operator so that the training application is able to train at least one Artificial Intelligence, AI / Machine Learning, ML, based model.

For example, the training application acquires from a license management function in the operator network a license for accessing operator data generated by one or more network entities in the operator network. The training application accesses only the operator data to which the training application is allowed to access based on the acquired license and then uses the obtained operator data as training data.

The acquired license may be implemented by one or more credentials, also referred to herein as the license credentials. The license may be granted only for a given period of time. The license may also be updated as necessary, in dependence for example on training needs defined by the operator that uses the trained model. Further the operator may update (e.g. terminate, resume, change) the permission when the data access session has been completed by the training application.

A license credential includes encoded data that prove the rights of a training application to access specific operator data from operator data storage. A license credential includes is a piece of operator generated and authenticated data. A license credential may provide information concerning, e.g., what operator data the training application can access and/or to what purpose. A license credential may be only readable by the training application or even completely encrypted to prevent any amendment by the training application.

In one or more embodiments, a repository or a data management function or a license management function provides to the training application one or more data source identifiers of data source(s) storing the requested operator data to allow the training application to access to these operator data. These operator data may be used as training data for one or more AI/ML based model. The operator may control (e.g. in dependence of training needs for the model trained by the training application depending on the way the operator wants to use the trained model) the nature of the training data used by the training application to train the AI/ML based model, for example by controlling to which data set and which operator data in the operator network the training application is allowed to access.

From the vendor perspective, this allows the training application to request the permission to get the relevant data of an operator and to adequately be trained to provide the proper services. From operator perspective, this allows the operators to evaluate and control that a training application has the rights to access a piece of data before such data are provided to that training application.

This further allows the vendor to keep the internal design of its training application from the access of any other parties (e.g., the operator). Similarly, the operator can control to which vendor it provides which data. Even if the training application is actually operated by the operator in the operator's network, the operator still needs to control the access of the training application to the operator's data.

This also allows to train the training application by using the operator data directly where the host of the training application may be located either within the operator's network or outside the operator's network while only providing to access the relevant data during network operation.

An AI/ML based training application (also designated herein as training application) may be defined as a complete and deployable software package and environment configured to train one or more AI/ML models. Generally, a training application may contain a logically top-level AI/ML model and application-level descriptions. The apparatus hosting the AI/ML based training application is designated here as the training host.

AI/ML based models may include various models, e.g. supervised learning models where training data include annotation data, unsupervised learning models, reinforcement learning models, deep neural network, etc. Separately trained AI/ML models can also be chained together in a ML pipeline during inference.

Training of models may be performed offline (by a training host outside the operator network) or online (by a training host in the operator network). Offline training is proposed as best practice (even for reinforcement learning type of scenarios): offline training means that a model is first trained with offline data, and trained model is then deployed in the operator network for inference. Online training refers to scenarios such as reinforcement learning, where the model 'learns' as it is executing in the network. However, even in the latter scenario, it is possible that some offline training may also happen. A model usually needs to be trained and tested before deploying the model in the network.

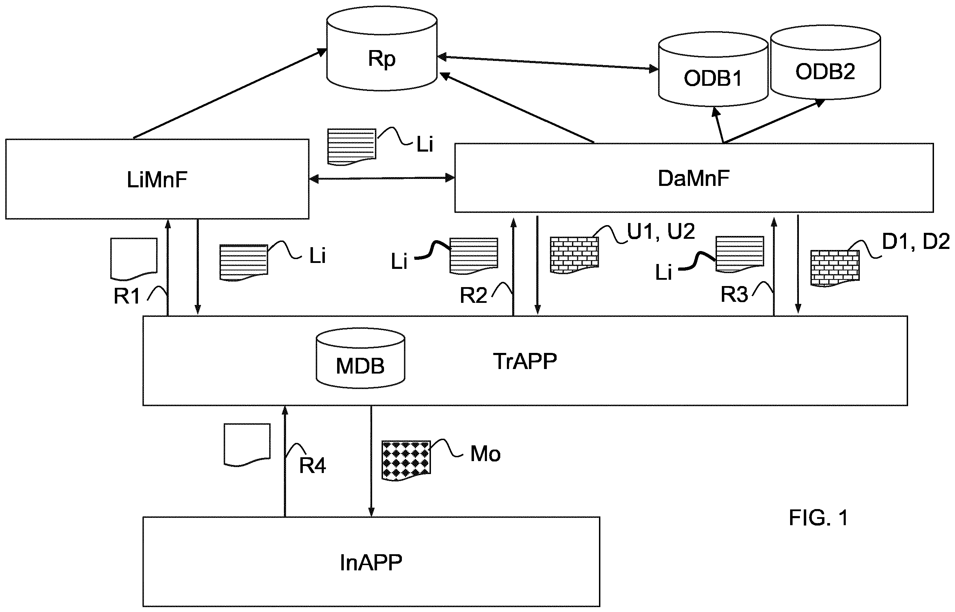

FIG. 1 shows a block diagram of a system for training of AI/ML-based models. The FIG. 1 shows how various entities may interact for a training application TrApp to get the license to access to relevant operator data during network operation.

The system may include one or more training applications TrApp, one or more inference applications InApp, at least one license management function LiMnF and at least one data management function DaMnF. In the example of FIG. 1 only one training application TrApp and only one inference applications InApp are shown for simplification reasons. The system may include one or more data sources ODB1, ODB2 (e.g. databases or data providers) where the operator data are stored. The system may include at least one repository Rp configured to store data source identifier of one or more data sources ODB1, ODB2 (e.g. databases or data providers).

The Inference Application InApp configured to request (R4) the training application TrAPP to train or retrain an AI/ML-based model instance e.g., for a reason such as that the ML model instance is underperforming or the ML-based model has to be trained on a larger or different operator data set.

The training application TrApp (e.g. a vendor-provided model training application) is configured to train one or more AI/ML-based models. The training application TrApp is configured to request access to and obtaining the operator data needed to train the one or more ML-based models. The one or more ML-based models may be stored in model database MDB.

The training application TrAPP is configured to acquire from the license management function MnF a license Li to access the operator data relevant for training one or more AI/ML-based models. The training application TrApp is configured to send a request (R1) for a license to the license management function LiMnF and receive in response one or more license credentials Li.

A license credential may define access rights (e.g. read only access rights) to one or more target-attributes of one or more target data object instances. A license credential may include at least one identifier of a target data object instance (e.g. MOI(s)) to which the training application is allowed to access. A license credential may include at least one identifier (e.g. name) of a target attribute of the data object instance to which the training application is allowed to access. A license credential can be decoded and / or checked by all concerned operator entities including the repository Rp and the data management function DaMnF.

The license credential may be digitally signed and / or encrypted. The license credential may be encrypted by the license management function LiMnF using a public key of an asymmetric key pairs and may be decrypted by other network entities using the private key of the asymmetric key pairs. Likewise, the license credential may be signed by the license management function LiMnF using a public key of an asymmetric key pairs and the signature be checked by other network entities using the private key of the asymmetric key pairs.

The license management function LiMnF is configured to receive at least one request (R1) for a license and to assign a license (e.g. data access rights) to a valid entity (e.g., a training application TrAPP) to access specific operator data. The license management function LiMnF may be configured to authenticate (e.g. based on cryptographic keys, challenge response, etc) each training application TrApp requesting for a license before providing the requested license.

The repository Rp is configured to receive at least one request (R2) for data source identifier and provide in response one or more data source identifiers (e.g. URI, Uniform Resource Identifier) U1, U2 of one or more data source(s) ODB1, ODB2 where the requested operator data are stored.

The request (R2) for data source identifier may be sent directly by the training application TrAPP to the repository Rp. The repository Rp may then be configured to check whether the request (R2) for data source identifier is valid based on a license credential provided with the request (R2) for data source identifier and / or to determine to which operator data the requesting training application TrApp is allowed to access based on the a license credential: in such a case the repository Rp is configured to provide in response to the request (R2) for data source identifier only data source identifiers of the one or more data source(s) ODB1, ODB2 including operator data to which the training application TrApp is allowed to access.

The request (R2) for data source identifier may also be sent by either the license management function LiMnF or the data management function DaMnF to the repository Rp. In such case the license management function LiMnF or respectively the data management function DaMnF may act as front-end for the repository Rp and send the request (R2) for data source identifier on behalf of a requesting training application TrApp. The license management function LiMnF or respectively the data management function DaMnF may first check (e.g. based on a license credential) that this training application TrApp is allowed to access to operator data D1, D2 available from one or more data source(s) ODB1, ODB2 before sending the request (R2) for data source identifier of the one or more data source(s) ODB1, ODB2.

The data management function DaMnF is configured to control access to operator data stored in one or more database(s) ODB1, ODB2 and / or in the repository Rp. The data management function DaMnF is configured to receive from a training application TrApp a request (R3) for operator data including a license (e.g. one or more license credentials), to check the validity of each license credential Li provided by the training application TrAPP and when the data management function DaMnF finds that the license credential is valid, the data management function DaMnF is configured to provide the requested operator data D1, D2 to the training application TrAPP.

For checking the validity of a license credential, the repository Rp or respectively the data management function DaMnF may store cryptographic key that allow it to decrypt a license credential and / or check a signature in a license credential. For checking the validity of a license credential, the repository Rp or respectively the data management function DaMnF may also send the license credential to the license management function LiMnF and receive in response an indication that the license credential is valid or not.

The data management function DaMnF may be configured to check whether the request (R3) for operator data is valid based on a license credential provided with the request (R3) for operator data and / or to determine to which operator data the training application TrApp is allowed to access based on the a license credential: in such a case the data management function DaMnF if configured to provide in response to the request for operator data only the operator data to which the training application TrApp is allowed to access.

The training application TrAPP is configured to train one or more AI/ML-based model using the received operator data as training data and generate a trained model Mo. The training application TrAPP is configured to deploy the trained model Mo to the inference application InAPP. The inference application InAPP is configured to use the trained AI/ML-based model instance to generate decisions at runtime.

The inference application InAPP may then request the license management function LiMnF to update the license for the inference application InAPP / training application TrAPP. When operator data is access is no longer needed for model training, the training application TRApp may also request the license management function LiMnF to update the license for the InAPP / TrAPP.

The distribution of the various functions (license management function LiMnF, data management function DaMnF, repository Rp, inference application InApp) in the operator network may vary in many manners such that for example two or more or all functions are implemented on a same and single physical device or apparatus. For example the license management function LiMnF and data management function DaMnF may be implemented by a same physical device or apparatus having access to the repository Rp, the operator databases ODB1, ODB2 and a license database LDB storing the various license credentials generated by the license management function LiMnF. For example the data management function DaMnF and repository Rp may be implemented by a same physical device having access to the operator databases ODB1, ODB2. For example the repository Rp and operator databases ODB1, ODB2 may be implemented by a same physical device or be part of a same database.

The access to operator data may be based on a data model that defines a plurality of data objects (e.g. software object) and their attributes (e.g. parameters), where the attributes may store relevant operator data to be used as training data. A data object is used to represent an entity (e.g. software function, hardware entity, etc) in the network. An object class may be defined for a given type of entity. A data object instance (e.g. software object instance) of a given object class may be generated for representing an entity of a given type corresponding to the given object class.

In one or more embodiments, the management of operator data relies on software objects defined according to any object oriented technology. The management of operator data may for example be performed as defined in 3GPP TS28.622. This document specifies the generic network resource information that can be communicated between an IRPAgent and an IRPManager for telecommunication network management purposes, including management of converged networks and networks that include virtualized network functions. This document also specifies the semantics of information object class attributes and relations visible across the reference point in a protocol and technology neutral way. It does not define their syntax and encoding.

In this document Information Object Class (IOC) and Managed Object Instance (MOI) are defined. An Information Object Class (IOC) represents the management aspect of a network resource. It describes the information that can be passed/used in management interfaces. Their representations are technology agnostic software objects. IOC has attributes that represents the various properties of the class of objects. The term "attribute" may be defined as in TS 32.156: "Telecommunication management; Fixed Mobile Convergence (FMC) Model Repertoire*".* Furthermore, IOC may for example support operations providing network management services invocable on demand for that class of objects. See TS 32.156 for additional information on IOC.

A Managed Object Instance (MOI) is an instance (software object instance) of a Managed Object Class (MOC) representing the management aspects of a network resource. Its representation is a technology specific software object. The MOC is a class of such technology specific software objects. An MOC is the same as an IOC except that the former is defined in technology specific terms and the latter is defined in technology agnostic terms. MOCs are used/defined in SS level specifications. IOCs are used/defined in IS level specifications.

A target data object instance (e.g. target MOI) designates a data object instance of a specific object class to which a training application is requesting access, the data object instance being stored in a database and including one or more attributes that the training application needs for training a model. A target attribute designates an attribute (e.g. of a target data object) to which a training application is requesting access. Any object-oriented software technology may be used.

Alternatively, instead of data objects, data structures may be used to store the target attributes if no object-oriented software technology is available.

The training application TrAPP may be configured to send a request (R3) for operator data to the data management function DaMnF or directly to one or more data source(s) ODB1, ODB2 where the requested operator data are stored. The request (R3) for operator data may include the obtained license (e.g. one or more license credentials) as well as one or more identifier(s) of data object instances (e.g. MOI) and/or one or more identifier(s) (e.g. names) of attributes. For example, when the model is a prediction model using a supervised learning process, the training data may include inputs for the prediction model and / or annotation data corresponding to predicted parameters obtained for given inputs. The model parameters are for example adjustable parameters of the prediction model itself (for example, a number of layers or branches of a decision tree, number of clusters of a clustering algorithm, internal coefficients of the model, etc).

The request (R3) for operator data may include authentication data to allow the authentication of the training application TrAPP by the data management function DaMnF. The authentication data may for example be included in each license credential. The authentication data may include an application identifier of the training application TrAPP and / or a signature of the training application TrAPP and / or secret key assigned to the training application TrAPP etc.

If not yet known where the relevant operator data are stored, the training application TrAPP is configured to request (R2) the repository Rp for the data source identifier where to find the relevant operator data matching the given attribute name(s). The request (R2) for data source identifier may include one or more identifier(s) of data object instances (e.g. MOI) and the license (e.g. one or more license credentials). The repository is configured to reply by providing one or more data source identifier(s) (e.g. URI) to the training application TrApp.

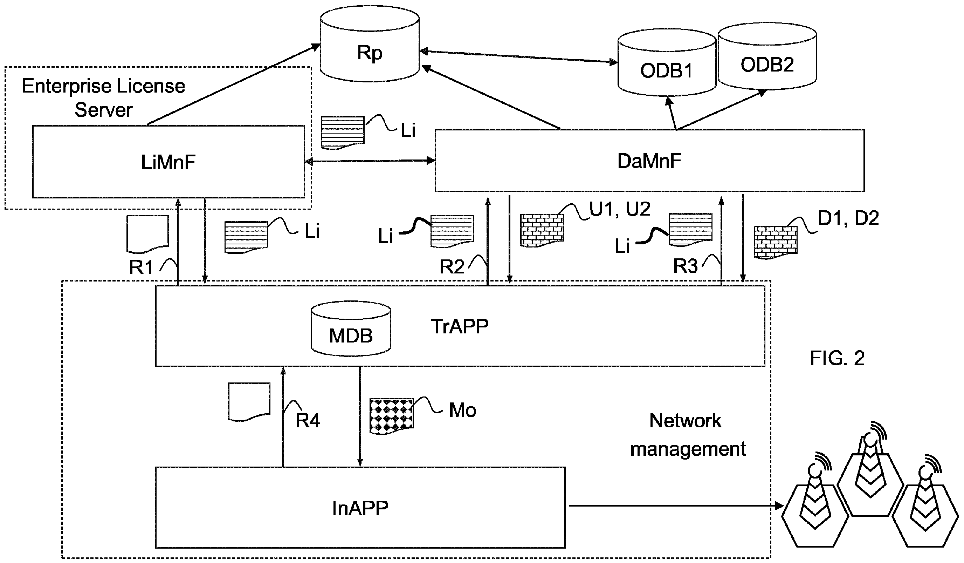

FIG. 2 shows a block diagram of a system for training of AI/ML-based models according to an example. The various functions and entities are the same as for FIG. 1 but this FIG. 2 illustrates a specific use case for interference detection.

In this use case, the training application TrApp may be an application deployed in the OAM (Operations Administration and Management) / network management. In O-RAN for example, such an application may be an rAPP deployed in the Non Real-Time RAN Intelligent Controller (Non-RT-RIC) or an xAPP deployed on the near real-Time RAN Intelligent Controller (Near RT-RIC).

Similarly, the InApp may be an application deployed in the OAM / network management, e.g as an rAPP in the Non-RT-RIC or an xAPP in the Near RT-RIC. Given the ML model, the inference application InApp can then be used to read data directly from the cells in the network to detect the interference.

As illustrated by FIG. 2, the license management function LiMnF may be deployed as an application on an enterprise license server.

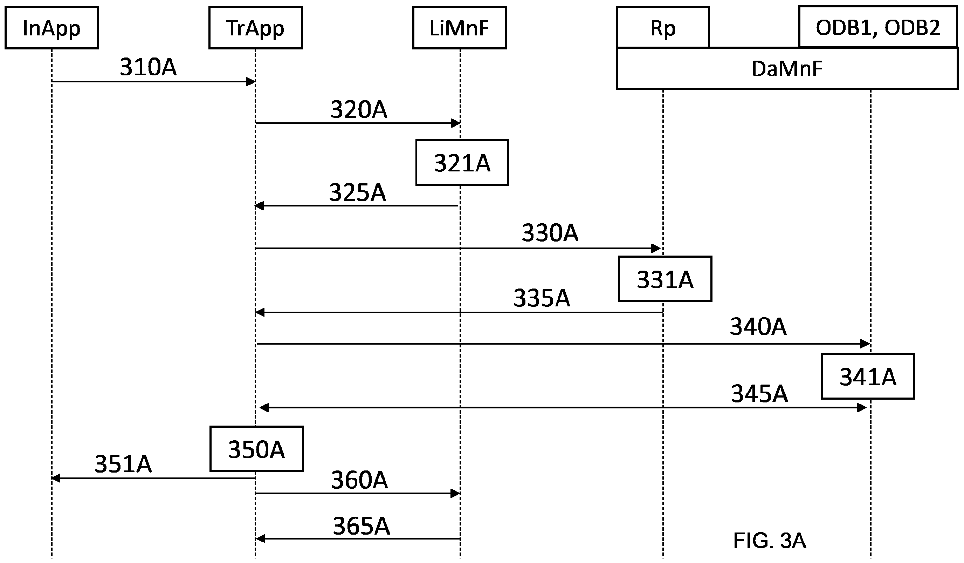

FIG. 3A shows a flow chart of a method for training of AI/ML-based models according to an example. The steps may be performed by a training application TrApp configured to train one or more AI/ML based models, by an inference application InApp, a license management function LiMnF, a repository Rp and a data management function DaMnF according to any example or embodiment described herein.

In step 310A the training application TrAPP receives from an inference application InApp a request (R4) to a training application TrAPP to train/retrain an AI/ML based model instance, e.g., for a reason such as that the ML model instance is underperforming. In step 310A, the training application TrAPP determines that there is need for new operator data (e.g. that data characteristics may have changed or the data features of AI/ML model need to be revised).

In step 320A the training application TrAPP sends to a license management function LiMnF a request (R1) for acquiring a license for accessing operator data generated by one or more network entities in a network. The operator data may include one or more target attributes of one or more data object instances to which the training application TrAPP is requesting access. The request (R1) for acquiring a license may include one or more identifiers (e.g. names) of target attributes to which the training application TrAPP is requesting access and one or more identifiers of target associated data object instance (e.g. MOI) to which the training application TrAPP is requesting access. In this case, the license will be allowed for the training application TrAPP and the target attribute / data object instance. Though, if a license concerning a specific ML model in the TrAPP is needed, the request (R1) for acquiring a license may provide an identifier of the model to be trained. The request (R1) for acquiring a license may include the purpose for the license (e.g., "ML Data Access") when other types of license may be allowed by the license management function LiMnF.

In step 321A the license management function LiMnF determine to which operator data the training application TrAPP is allowed to access. If the request (R1) for acquiring a license includes one or more identifiers (e.g. names) of target attributes or one or more identifiers of target associated data object instance (e.g. MOI) to which the training application TrAPP is requesting access, the license management function LiMnF determines whether the training application TrAPP is allowed to access to at least some of the requested operator data.

In step 325A, the training application TrAPP receives in response to the request (R1) for acquiring a license one or more license credentials if the license management function LiMnF has determined in step 321A that the training application TrAPP is allowed to access to at least some of the requested operator data. The one or more license credentials may include at least one identifier of a target data object instance to which the training application is allowed to access. The one or more license credentials may include at least one identifier (e.g. name) of a target attribute of a data object instance to which the training application TrAPP is allowed to access. The one or more license credentials may include information on a period of validity of the license.

In step 330A, if the training application TrAPP does not yet known where the relevant data can be found, the training application TrAPP sends to the repository Rp or the data management function DaMnF a request (R2) for data source identifier. The request (R2) for data source identifier may include the license credentials received in step 325A. The request (R2) for data source identifier may include one or more identifiers (e.g. names) of target attributes to which the training application TrAPP is requesting access and/or one or more identifiers of target associated data object instance to which the training application TrAPP is requesting access.

Step 331A is optional. When the request (R2) for data source identifier includes one or more license credentials, the repository Rp or the data management function DaMnF may checks in step 331A the validity of the license credential provided with the request (R2) for data source identifier before responding in step 335A.

In step 335A, the training application TrAPP receives in response to the request (R2) for data source identifier the requested identifiers (e.g. one or more URI) of one or more data sources (e.g. databases or data providers ODB1, ODB2) where the requested operator data can be accessed. Each data source identifier (e.g. URI) indicates a location of a data source (e.g. database or data provider) where there relevant operator data matching the given attribute name can be accessed and allows the training application TrAPP to read the value of one or more attributes of a data object instance.

In step 340A, the training application TrAPP sends to a data management function DaMnF one or more requests (R3) for accessing data. A request (R3) for accessing data may include one or more of the license credentials received in step 325A. For example a license credential may be required for each request or it may be submitted only once for multiple fetches performed based on that license credential for a certain amount of time. A request (R3) for accessing data may include one or more identifiers (e.g. names) of target attributes to which the training application TrAPP is requesting access and / or one or more identifiers of target associated data object instance to which the training application TrAPP is requesting access..

Step 341A is optional. When the request (R3) for accessing data includes one or more license credentials, the data management function DaMnF checks in step 341A the validity of the license credential provided with the request (R3) for accessing data before responding in step 345A.

In step 345A, if the license credentials are found to be valid by the data management function DaMnF, the training application TrAPP starts accessing the operator data to which the training application (TrApp) is allowed to access.

In step 350A the training application TrAPP uses the received operator data as training data to train one or more AI/ML based models.

In step 351A the training application TrAPP sends one or more AI/ML based trained model to the inference application InApp.

In step 360A, when operator data access is no longer needed, the training application TrAPP requests the license management function LiMnF to update the license for the training application TrAPP and / or the associated inference application InAPP.

In step 365A, the license management function LiMnF returns an acknowledgment to indicate that the license has been updated.

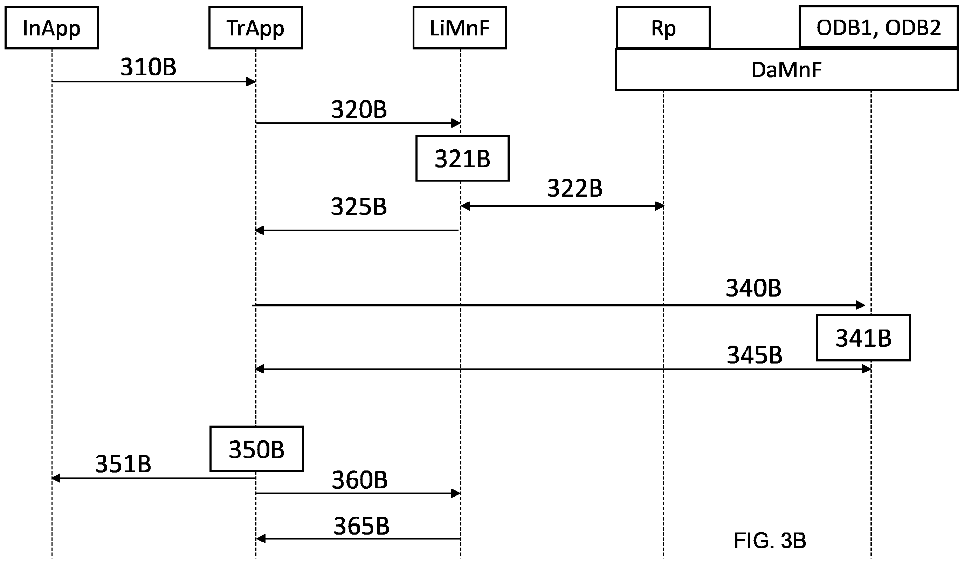

FIG. 3B shows a flow chart of a method for training of AI/ML-based models according to an example. The steps may be performed by a training application TrApp configured to train one or more AI/ML based models, by an inference application InApp, a license management function LiMnF, a repository Rp and a data management function DaMnF according to any example or embodiment described herein.

The method of FIG. 3B is a variant of the method of FIG. 3A in which the training application TrAPP receives from the license management function LiMnF (e.g. with the license credential or as part of the data encoded into the license credentials or in a separate message) at least one data source identifier (e.g. URI) of a data source where the operator data to which the training application TrAPP is allowed to access are stored. This avoid the steps 330A to 335A of FIG. 3A for obtaining the data source identifiers.

Step 310B is identical to step 310A described by reference to FIG. 3A.

Step 320B differs from step 320A in that the training application TrAPP sends to a license management function LiMnF a request (R1) for acquiring a license for accessing operator data generated by one or more network entities in a network and expect to receive in response to this request, not only one or more license credentials, but also one or more data source identifiers U1, U2 (e.g. one or more URI) of one or more data sources (e.g. databases or data providers ODB1, ODB2) where the requested operator data can be accessed.

Step 321B is identical to step 321A described by reference to FIG. 3A. Step 322B is executed after step 321B.

In step 322B, the license management function LiMnF sends to the repository Rp or the data management function DaMnF a request (R2) for data source identifier on behalf of the training application TrAPP. The request (R2) for data source identifier may include one or more identifiers (e.g. names) of target attributes to which the training application TrAPP is requesting access and/or one or more identifiers of target associated data object instance to which the training application TrAPP is requesting access. The license management function LiMnF receives in response the data source identifiers U1, U2 (e.g. one or more URI) of one or more data sources (e.g. databases or data providers ODB1, ODB2) where the operator data which the training application is allowed to access are stored. Here, compared to the method described by reference to FIG. 3A, no license credential need to be checked.

Step 325B differs from step 325A in that the training application TrAPP receives in response to the request (R1) for acquiring a license not only one or more license credentials but also the data source identifiers U1, U2 (e.g. with the license credential or as part of the data encoded into the license credentials or in a separate message) of one or more data sources where the operator data which the training application is allowed to access are stored.

After step 325B, step 340B to 345B, 350B to 365B are executed. Steps 340B to 345B, 350B to 365B are identical respectively to the steps 340A to 345A, 350A to 365A described by reference to FIG. 3A.

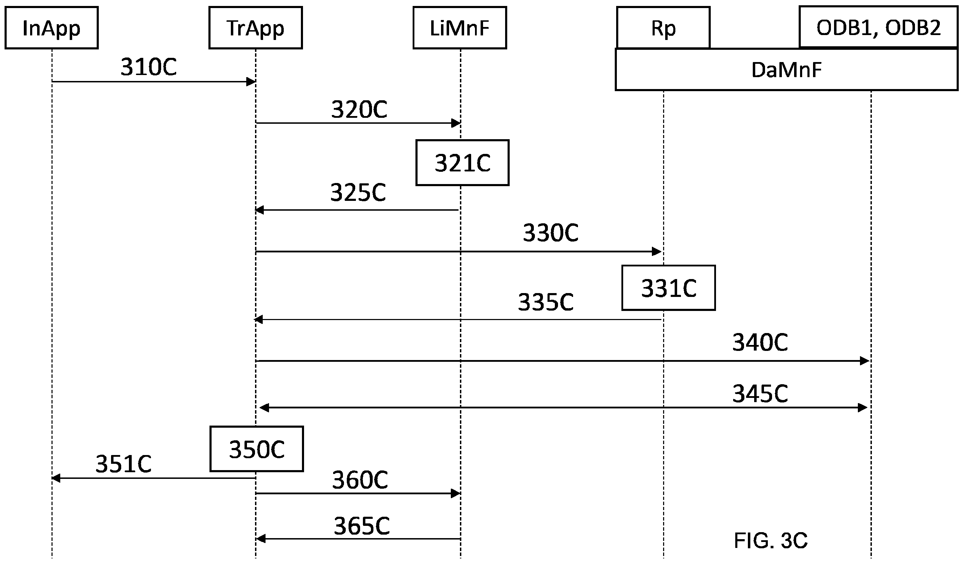

FIG. 3C shows a flow chart of a method for training of AI/ML-based models according to an example. The steps may be performed by a training application TrApp configured to train one or more AI/ML based models, by an inference application InApp, a license management function LiMnF, a repository Rp and a data management function DaMnF according to any example or embodiment described herein.

The method of FIG. 3C is another variant of the method of FIG. 3A in which the data discovery (i.e. obtaining the data source identifier) is implemented in conjunction with the data control (i.e. accessing operator data) while in the method of FIG. 3A the data discovery (i.e. obtaining the data source identifier) is implemented independently and separately from the data control (i.e. accessing operator data).

Steps 310C to 325C are identical respectively to steps 310A to 325A described by reference to FIG. 3A. In step 325C the training application TrAPP receives one or more license credentials but without any data source identifier.

Step 330C differs from step 330A in that the training application TrAPP sends to the repository Rp or the data management function DaMnF a request (R3) for operator data. The request (R3) for operator data includes the license credentials received in step 325C. The request (R3) for operator data includes one or more identifiers (e.g. names) of target attributes to which the training application TrAPP is requesting access and/or one or more identifiers of target associated data object instance to which the training application TrAPP is requesting access.

In step 331C, the repository Rp or respectively the data management function DaMnF checks the validity of the license credential provided with the request (R3) for operator data before responding in step 335C.

In step 335C the training application TrAPP receives in response to the request (R3) for operator data one or more data source identifiers (e.g. one or more URI) of one or more data sources (e.g. databases or data providers ODB1, ODB2) where the requested operator data can be accessed. After step 335C, step 340C is executed.

Step 340C is identical to step 340A described by reference to FIG. 3A except that the training application TrAPP does not need to provide again the license credentials received in step 325C to access to operator data and the data management function DaMnF does not need to check again the validity of the license credential. Therefore after step 340C, step 345C is executed which is identical to step 345A.

After step 345C, steps 350C to 365C are executed. Steps 350C to 365C are identical respectively to the steps 350A to 365A described by reference to FIG. 3A.

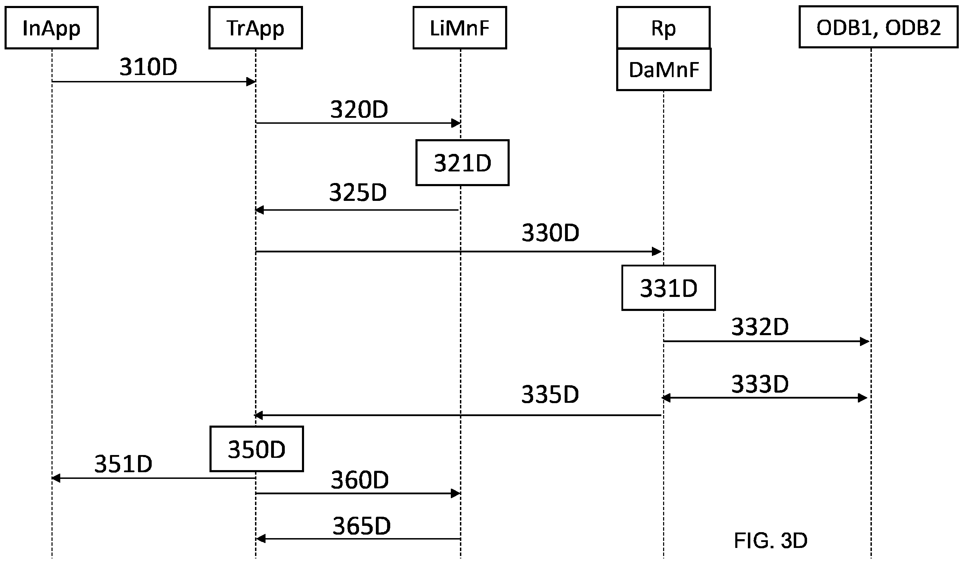

FIG. 3D shows a flow chart of a method for training of AI/ML-based models according to an example. The steps may be performed by a training application TrApp configured to train one or more AI/ML based models, by an inference application InApp, a license management function LiMnF, a repository Rp and a data management function DaMnF according to any example or embodiment described herein.

The method of FIG. 3D is a variant of the method of FIG. 3C: in this variant the repository is used as a proxy for the data sources (e.g. databases or data providers ODB1, ODB2). In the method of FIG. 3D there is no need to provide data source identifiers to the training application TrApp.

Steps 310D to 325D and 331D are identical respectively to steps 310C to 325C and 331C described by reference to FIG. 3C. In Step 330D a request (R3) for operator data is received from the training application TrApp by the repository Rp or respectively the data management function DaMnF. After step 331D where the repository Rp or respectively the data management function DaMnF checks the validity of the license credential provided with the request (R3) for operator data received in step 330D, step 332D is executed.

In step 332D the repository Rp or respectively the data management function DaMnF forwards the request (R3) for operator data received in step 330D to one or more data sources (e.g. databases or data providers ODB1, ODB2) where the requested operator data are stored.

In step 333D, the repository Rp or respectively the data management function DaMnF receives from the one or more data sources, in response to the request sent in step 332D, the requested operator data.

In step 335D, the repository Rp or respectively the data management function DaMnF forwards the operator data received in step 333D to the training application TrApp.

Step 350D is executed after step 335D. Steps 350D to 365D are identical respectively to the steps 350C to 365C described by reference to FIG. 3C (or likewise to steps 350A to 365A described by reference to FIG. 3A).

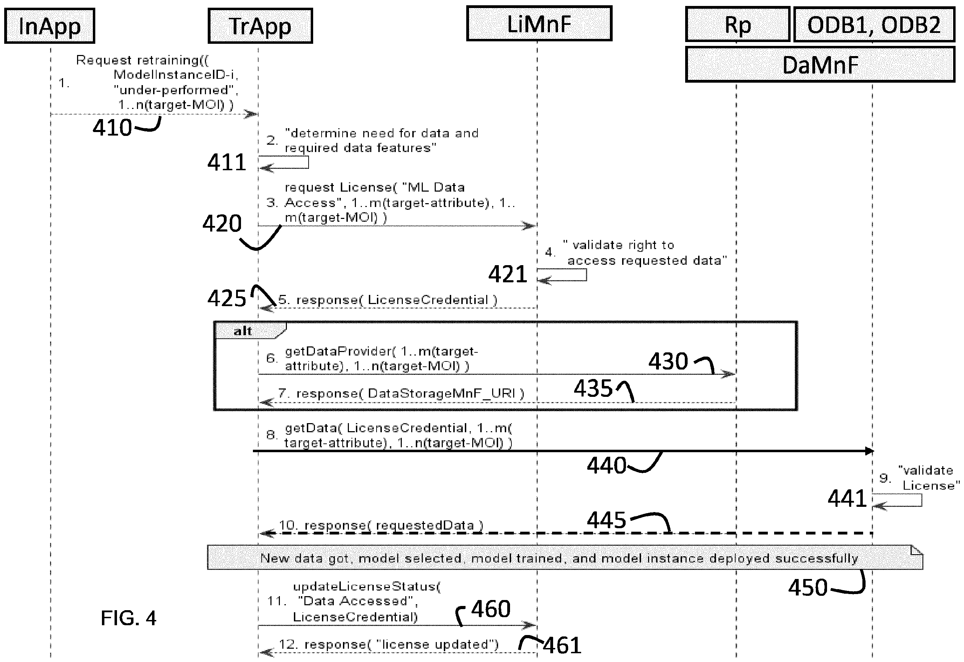

FIG. 4 shows a more detailed flow chart of a method for training of AI/ML-based models according to an example. The steps may be performed by a training application TrApp configured to train one or more AI/ML based models, by an inference application InApp, a license management function LiMnF, a repository Rp and a data management function DaMnF according to any example or embodiment described herein.

In step 410 the training application TrAPP is triggered to train/retrain an AI/ML based model instance.

The trigger may be a request (R4) (message "RequestRetraining") from an inference application InApp, e.g. for a reason such as that the ML model instance is underperforming. For cell interference detection for example (see the use case illustrated by FIG. 2) the InApp may request the TrApp to retrain the cell interference detection ML Model for a given city.

The request (R4) to train the model may include a list of Managed Object Instance (MOI) for which training should be performed. For cell interference detection for example the request may include the list of cells in the selected city, the list of cells being here the MOI list. The request (R4) to train may also include a list of attributes to be used as training data when training the model, which applies for the case where the training application does know the required features of the model to be trained. For the cell interference detection example, the request may include a list containing some or all the metrics presented in Table 1 below. For cell interference detection for example: the request may include the following attributes: Uplink Throughput, Uplink SINR (Signal to Interference plus Noise Ratio), Uplink RSSI (Received Signal Strength Indication) and Downlink Throughput.

The trigger may come from within the training application TrAPP when the TrApp determines a need for input data and / or predicted data for one or more model. For example when a timer expires on a particular model indicating that the model has been used for long without retraining and so the model needs to be retrained. For example when the TrAPP determines that there is need for a new set of training data and / or new parameters to be predicted by the model and / or new parameters of the model itself. For example the network context or network conditions may have changed or the data features (e.g. model parameters) taken into account in ML model may need to be revised. For cell interference detection for example: the list of cells may include new cells that have not been considered before such that new training is needed to take into account these new cells in the trained model. Also in the case where the TrApp understands the required capabilities of the ML model, the TrApp may chose a different set of attributes from those given in step 410 or chose the right attributes if none are given in step 410. For cell interference detection for example the Downlink CQI (Channel Quality Indicator) may be added as an extra attribute that could be used to train an ML model and predict interference better.

In step 420 the training application TrAPP sends to a license management function LiMnF a request (R1) for acquiring a license (message "RequestLicense") for accessing operator data generated by one or more network entities in a network. The operator data may include one or more target attributes of one or more data object instances to which the training application TrAPP is requesting access.

The request (R1) for acquiring a license may include one or more identifiers (e.g. names) of target attributes to which the training application TrAPP is requesting access and one or more identifiers of target associated data object instance (MOI) to which the training application TrAPP is requesting access. In this case, the license will be allowed for the training application TrAPP and the target attribute / data object instance. For cell interference detection for example, the target MOI(s) identify all the cells that have been chosen while the target attribute may be the metrics Uplink Throughput, Uplink SINR, Uplink RSSI, Downlink Throughput and Downlink CQI.

If a license concerning a specific ML model in the TrAPP is needed, the request (R1) for acquiring a license may provide an indication of the model to be trained. In this case the license may be specific to the model to be trained. For example, for cell interference detection, the request may include an identifier of one or more cells for which to be taken into account in the model.

The request (R1) for acquiring a license may include the purpose for the license (e.g., "ML Data Access") when other types of license may be allowed by the license management function LiMnF.

In step 421 the license management function LiMnF determines whether the training application TrAPP is allowed to access to at least some of the requested operator data.

In step 425, the training application TrAPP receives in response to the request (R1) for acquiring a license one or more license credentials if the license management function LiMnF determines that the training application TrAPP is allowed to access to at least some of the requested operator data. The one or more license credentials may include at least one identifier of a target data object instance to which the training application is allowed to access. The one or more license credentials may include at least one identifier (e.g. name) of a target attribute of a data object instance to which the training application TrAPP is allowed to access. The one or more license credentials may include information on a period of validity of the license.

Optionally, the training application TrAPP may receive in step 425 from the license management function LiMnF (e.g. with the license credential or as part of the data encoded into the license credentials or in a separate message) at least one data source identifier (e.g. URI) of a data source where the requested operator data to which the training application TrAPP is allowed to access are stored. In this case, the method may include a step 321 during which the license management function LiMnF sends to the repository Rp a request for data source identifier and receives the at least one data source identifier (e.g. URI) of a data source where the operator data to which the training application TrAPP is allowed to access are stored.

A license credential may include an application identifier of the training application TrApp that is being given the rights to access data to allow a data management function DaMnF to authenticate the training application TrApp requesting access to the operator data. A license credential may also include the ML model for which the operator data is requested. A license credential may also include the MOIs and their attributes (e.g. attribute names) whose values may be read by the authorized training application TrApp. A license credential may also include the length of time for which the identified operator data may be requested or accessed from the repository Rp or data source ODB1, ODB2.

In step 430, if the training application TrAPP does not yet known where the relevant data can be found, the training application TrAPP sends to a repository Rp a request (R2) for data source identifier (message "getDataProvider"). The request (R2) for data source identifier may include the license credentials received in step 425. The request (R2) for data source identifier may include one or more identifiers (e.g. names) of target attributes to which the training application TrAPP is requesting access and/or one or more identifiers of target associated data object instance to which the training application TrAPP is requesting access.

In step 435, the training application TrAPP receives in response to the request (R2) for data source identifier the requested identifiers (e.g. one or more URI) of one or more data sources (e.g. databases or data providers ODB1, ODB2) where the requested operator data can be accessed. Each data source identifier indicates a location of a data source (e.g. database or data provider) where there relevant operator data matching the given attribute name can be accessed and allows the training application TrAPP to read the value of one or more attributes of a data object instance.

In step 440, the training application TrAPP sends to a data management function DaMnF one or more requests (R3) for accessing data (message "getData"). A request (R3) for accessing data may include one or more of the license credentials received in step 425. For example a license credential may be required for each request or it may be submitted only once for multiple fetches performed based on that license credential for a certain amount of time. A request (R3) for accessing data may include one or more identifiers (e.g. names) of target attributes to which the training application TrAPP is requesting access and / or one or more identifiers of target associated data object instance to which the training application TrAPP is requesting access.

In step 441, the data management function DaMnF authenticates the training application TrApp on the basis of the application identifier in the license credential(s) and determines whether the license credentials are valid.

In step 445, if the license credentials are found to be valid by the data management function DaMnF and the training application TrApp has been authenticated in step 441, the training application TrAPP can start accessing the operator data to which the training application (TrApp) is allowed to access.

In step 450 the training application TrAPP uses the received operator data as training data to train one or more AI/ML based models.

In step 451 the training application TrAPP sends one or more AI/ML based trained model to the inference application InApp.

In step 460, when operator data access is no longer needed, the training application TrAPP requests the license management function LiMnF to update the status of license for the training application TrAPP and / or the associated inference application InAPP (message "updateLicenseStatus").

In step 465, the license management function LiMnF returns an acknowledgment to indicate that the license has been updated.

To illustrate data management aspects further examples will be described by reference to table 1. We use here a simplified use case on detecting cell interferences.

A typical network includes one or more databases storing the data available on multiple Managed Object Instances (MOIs) within the network. Examples of MOIs in a network are MOIs corresponding to network entities or network portions: like gNBs, cells, antenna, etc. A MOI is configured to store attributes of the corresponding network entity / network portion. The values of the attributes may be kept in one or more databases, e.g. one or more databases or storages for each city covered by the network. However the data may be requested via a single, central data management function or repository.

Each cell in the network may have a Performance Management (PM) instance that capture values for one or more metrics. For example for the interference related metrics of each cell may include metrics of various parameters: Uplink Throughput, Uplink MCS, Uplink SINR, Uplink RSSI, UE Power Headroom, Downlink Throughput, Downlink MCS, Downlink CQI, etc. The metrics are collected at different intervals. For example, for each cell a table (similar to table 1) may be stored with the values of the multiple metrics obtained at different time intervals (in table1 every 15 minutes).

**Table 1: Example PM data for a cell**

| Time | Uplink Throughput | Uplink MCS | Uplink SINR | Uplink RSSI | UE Power Headroom | Downlink Throughput | Downlink MCS | Downlink CQI |
|---|---|---|---|---|---|---|---|---|
| 03:00 | | | | | | | | |
| 03:15 | | | | | | | | |
| 03:30 | | | | | | | | |
| 03:45 | | | | | | | | |
| etc | | | | | | | | |

A training application TrApp called here the cell interference detector may use a machine learning model to detect cell interference. Cell interference may typically be detected through Reduced Uplink Throughput, Reduced Downlink Throughput, Increased Drop Rate.

The training application TrApp (the cell interference detector) needs to access operator data to train the ML model that is able to detect the interference in any given city, which operator data is available in the operator repository. Therefore to detect interference in a given city, the training application TrApp will have to obtain all the relevant attributes (Uplink Throughput, Downlink Throughput, Drop Rate) of all the cells (MOI) covering the city.

Table 2 below show example messages that may be implemented using the standardized operation in 3GPP SA5 in the methods described by reference to FIGS. 3 and 4.

**Table 2: example messages**

| Steps | Message | | Implementation | |
|---|---|---|---|---|
| 310A, | | RequestRetraining ( | ProvMnS.updateMOI ( MOI, MOI_attribute, | |
| 310B, | | ModelInstanceID-i, | | MOI_attribute_value) |
| 310C, | | "under-performed", | With: | |
| 310D, | | 1..n(target-MOI) ) | | - MOI = ML model; |
| | | | | - MOI_attribute = retraining status |
| 410 | | | | - MOI_attribute value="retrain" |
| 320A, | RequestLicense ( | | ProvMnS.createMOI(MOI, MOI_attributeList) | |
| 320B, | "ML Data Access", | | With: | |
| 320C, | 1..m(target-attribute), | | | - MOI = DataLicenseCredential; |
| 320D, | 1..m(target-MOI) ) | | | - MOI_attributeList = list of attributes to consider including the required MOIs for data and attributes |
| 420 | | | | |
| 325A, | response( LicenseCredential | | ProvMnS.notify(DataLicenseCredential) | |
| 325B, | ) | | | |
| 325C, | | | | |
| 325D, | | | | |
| 425 | | | | |
| 330A, | getDataProvider ( | | ProvMnS.readMOI(Data, filter1, filter2) | |
| 330B, | 1..m(target-attribute), | | With: | |
| 330C, | 1..n(target-MOI) ) | | | - filter1= target-attribute(s), |
| 430 | | | | - filter2= target-MOI(s) |
| 335A, | response( | | | ProvMnS.notify(DataStorageMnF_URI) |
| 335B, | DataStorageMnF_URI ) | | | |
| 335C, | | | | |
| 435 | | | | |
| 340A, | getData ( | | ProvMnS.createMOI (MOI, MOI_attributeList, | |
| 340B, | LicenseCredential, | | | LicenseCredential) |
| 340C, | 1..m(target-attribute), | | With: | |
| 330D, | 1..n(target-MOI) ) | | | - MOI = DataObject is a standardized class for data retrieved from standardized sources; |
| 440 | | | | - MOI_attributeList = list of attributes to required in data |
| | | | | and attributes |
| | | | | - LicenseCredential= the standardized |
| | | | | DataLicenseCredential datatype |
| 345A, | response( requestedData ) | | requestedData = File- or Stream-based reporting for data | |
| 345B, | | | | |
| 345C, | | | | |
| 335D, | | | | |
| 445 | | | | |
| 360A, | updateLicenseStatus( | | ProvMnS.deleteMOI(MOI, MOI_attributeList) | |
| 360B, | "Data Accessed", | | With: | |
| 360C, | LicenseCredential) | | | - MOI = Data access License; |
| 360D, | | | | |
| 460 | | | | |
| 365A, | response( "license updated") | | | ProvMnS.notify(acknowledgement) |
| 365B, | | | | |
| 365C, | | | | |
| 365D, | | | | |
| 465 | | | | |

To use such messages, the existing data model may be adapted to
- introduce the ML model as a new Managed Object Instance;
- introduce a new attribute "retraining status" for the status of the ML model MOI;
- introduce a new Managed Object Instance representing a license credential and a datatype that can be notified (as defined in 3GPP SA5);
- introduce a new attribute of the DataObject datatype, the new attribute identifying a license credential MOI.

In the above messages:
- the parameter "ModelInstanceID-I" is the identifier of the ML model instance to be trained;
- the parameter "under-performed" is the reason for requesting the training of the model;
- the parameter "ML Data Access" is the purpose of the license requested by the training application TrApp;
- the parameter "target-MOl" is a MOI having one or more attributes needed for training (e.g. one or more parameters for which the inference application InAPP undertakes an optimization or a prediction);
- the parameter "1..n(target-MOI)" represents a list of n "target-MOl";
- the parameter "target-attribute" is an attribute of target MOI in which the inference application InAPP has interest, e.g. one for which the inference application InAPP computes an optimization or a prediction; for example, if the model performs a prediction from one or more input values to generate one or more predicted values, the target attribute may be an input or output of the model;
- the parameter "1..m(target-attribute)" represents a list of m "target- attribute";
- the parameter "DataStorageMnF_URI" represents a data source identifier;
- the parameter "LicenseCredential" is a license credential MOI, the various attributes of the license credential MOI are used to store parameters of the license;
- the parameter "Data Accessed" is the reasons for updating the license;
- the parameter "license updated" is the status of the license after update.

It should be appreciated by those skilled in the art that any functions, engines, block diagrams, flow diagrams, state transition diagrams and / or flowcharts herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processing apparatus, whether or not such computer or processor is explicitly shown.

Specific details are provided in the following description to provide a thorough understanding of example embodiments. However, it will be understood by one of ordinary skill in the art that example embodiments may be practiced without these specific details. For example, systems may be shown in block diagrams so as not to obscure the example embodiments in unnecessary detail. In other instances, well-known processes, structures and techniques may be shown without unnecessary detail in order to avoid obscuring example embodiments.

Although a flow chart may describe operations as a sequential process, many of the operations may be performed in parallel, concurrently or simultaneously. In addition, the order of the operations may be re-arranged or may sometimes be executed in the reverse order, depending upon the operations involved. A process may be terminated when its operations are completed, but may also have additional steps not included in the figure. A process may correspond to a method, function, procedure, subroutine, subprogram, etc. When a process corresponds to a function, its termination may correspond to a return of the function to the calling function or the main function.

Each described computation function, block, step can be implemented in hardware, software, firmware, middleware, microcode, or any suitable combination thereof. If implemented in software, the computation functions, blocks of the block diagrams and/or flowchart illustrations can be implemented by computer program instructions / software code, which may be stored or transmitted over a computer-readable medium, or loaded onto a general purpose computer, special purpose computer or other programmable processing apparatus and / or system to produce a machine, such that the computer program instructions or software code which execute on the computer or other programmable processing apparatus, create the means for implementing the functions described herein.

When implemented in software, firmware, middleware or microcode, the program code or code segments to perform the necessary tasks may be stored in a machine or computer readable medium such as a computer readable storage medium. When implemented in software, a processor or processors will perform the necessary tasks. For example, as mentioned above, according to one or more example embodiments, at least one memory may include or store computer program code, and the at least one memory and the computer program code may be configured to, with at least one processor, cause an apparatus to perform the necessary tasks. Additionally, the processor, memory and example algorithms, encoded as computer program code, serve as means for providing or causing performance of operations discussed herein.

In the present description, block denoted as "means configured to" perform a certain function shall be understood as functional blocks comprising circuitry that is adapted for performing or configured to perform a certain function. A means being configured to perform a certain function does, hence, not imply that such means necessarily is performing said function (at a given time instant). Moreover, any entity described herein as "means", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional or custom, may also be included. Their function may be carried out through the operation of program logic, through dedicated logic, through the interaction of program control and dedicated logic, or even manually, the particular technique being selectable by the implementer as more specifically understood from the context.

As used in this application, the term "circuit" or "circuitry" may refer to one or more or all of the following:
(a) hardware-only circuit implementations (such as implementations in only analog and/or digital circuitry) and
(b) combinations of hardware circuits and software, such as (as applicable) : (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions); and
(c) hardware circuit(s) and or processor(s), such as a microprocessor(s) or a portion of a microprocessor(s), that requires software (e.g., firmware) for operation, but the software may not be present when it is not needed for operation."

This definition of "circuit" or "circuitry" applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, an integrated circuit for a network element or network node or any other computing device or network device. The term circuitry may cover digital signal processor (DSP) hardware, network processor, application specific integrated circuit (ASIC), field programmable gate array (FPGA), etc.

The "circuit" or "circuitry" may be or include, for example, hardware, programmable logic, a programmable processor that executes software or firmware, and/or any combination thereof (e.g. a processor, control unit/entity, controller) to execute instructions or software and control transmission and receptions of signals, and a memory to store data and/or instructions.

The "circuit" or "circuitry" may also make decisions or determinations, generate frames, packets or messages for transmission, decode received frames or messages for further processing, and other tasks or functions described herein. The circuitry may control transmission of signals or messages over a radio network, and may control the reception of signals or messages, etc., via a radio network (e.g., after being down-converted by radio transceiver, for example).

As disclosed herein, the term "storage medium," "computer readable storage medium" or "non-transitory computer readable storage medium" may represent one or more devices for storing data, including read only memory (ROM), random access memory (RAM), magnetic RAM, core memory, magnetic disk storage mediums, optical storage mediums, flash memory devices and/or other tangible machine-readable mediums for storing information. The term "computer-readable medium" may include, but is not limited to, portable or fixed storage devices, optical storage devices, and various other mediums capable of storing, containing or carrying instruction(s) and/or data.

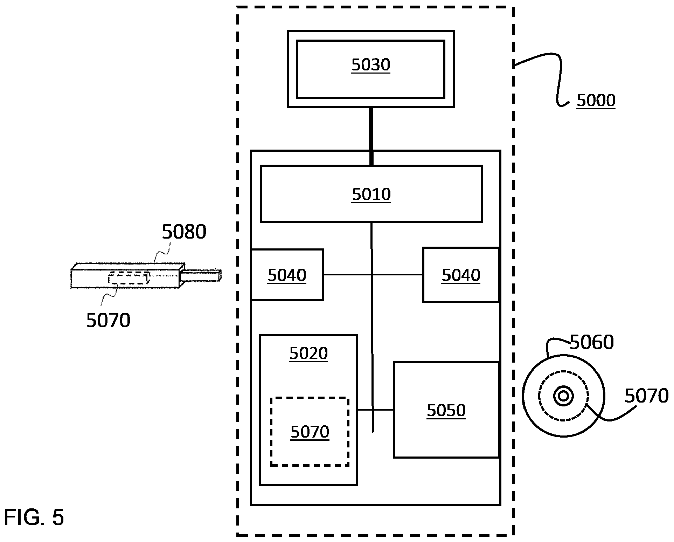

For completeness, FIG. 5 is a schematic diagram showing components of an apparatus (5000). The apparatus (5000) may include one or more or all of the functional components described herein: the license management function LiMnF and / or the data management function and / or the repository Rp and / or the training application TrApp and / or the inference application InApp. The apparatus (5000) may therefore include means for performing the functions defined herein for at least one of these entities.

The apparatus (5000) may be implemented as a single hardware device, for example in the form of a desktop personal computer (PC), a laptop, a personal digital assistant (PDA), a smart phone, a server, a console or may be implemented on separate interconnected hardware devices interconnected by one or more communication links, with wired and/or wireless segments. The apparatus (5000) may for example be in communication with one or more cloud computing systems, one or more remote servers or devices to implement the functions described herein for the concerned apparatus. The apparatus (5000) may also be implemented itself as a cloud computing system.

As represented schematically on FIG. 5, the apparatus (5000) may include at least one processor (5010), at least one memory (5050), and one or more communication interfaces (5040) (e.g. network interfaces for access to a wired / wireless network, including Ethernet interface, WIFI interface, USB interfaces etc) configured to communicate via network and / or to one or more peripheral devices (including a computer-readable storage medium 5080). The apparatus (5000) may include other associated hardware such as user interfaces (5030) (e.g. keyboard, mice, display screen, etc) connected via appropriate communication interface(s) (5040) with the processor. The apparatus (5000) may further include a media drive (5050) for reading a computer-readable storage medium 5060. The processor (5010) is connected to each of the other components in order to control operation thereof.

The processor (5010) may be configured to store, read, load and/or otherwise process computer program code (5070) stored in a computer-readable storage medium (5060) or 5080 and / or in the memory (5050) that, when executed by the at least one processor, causes the apparatus (5000) to perform one or more steps of a method described herein for the concerned apparatus (5000).

The processor (5010) may be any suitable microprocessor, microcontroller, integrated circuit, or central processing unit (CPU) including at least one hardware-based processor or processing core.

The memory (5050) may include a random access memory (RAM), cache memory, non-volatile memory, backup memory (e.g., programmable or flash memories), read-only memory (ROM), a hard disk drive (HDD), a solid state drive (SSD) or any combination thereof. The ROM of the memory (5050) may be configured to store, amongst other things, an operating system of the apparatus (5000) and / or one or more computer program code of one or more software applications. The RAM of the memory (5050) may be used by the processor (5010) for the temporary storage of data.

Embodiments of a computer-readable medium (5060), (5080) includes, but are not limited to, both computer storage media and communication media including any medium that facilitates transfer of a computer program from one place to another. Specifically, program instructions or computer readable program code to perform embodiments described herein may be stored, temporarily or permanently, in whole or in part, on a non-transitory computer readable medium of a local or remote storage device including one or more storage media.

As used herein, a computer storage medium (5060), (5080) may be any physical media that can be read, written or more generally accessed by a computer / a apparatus. Examples of computer storage media include, but are not limited to, a flash drive or other flash memory devices (e.g. memory keys, memory sticks, USB key drive), CD-ROM or other optical storage, DVD, magnetic disk storage or other magnetic storage devices, solid state memory, memory chip, RAM, ROM, EEPROM, smart cards, a relational database management system, a traditional database, or any other suitable medium from that can be used to carry or store program code in the form of instructions or data structures which can be read by a computer processor. Also, various forms of computer-readable medium may be used to transmit or carry instructions to a computer, including a router, gateway, server, or other transmission device, wired (coaxial cable, fiber, twisted pair, DSL cable) or wireless (infrared, radio, cellular, microwave). The instructions may include code from any computer-programming language, including, but not limited to, assembly, C, C++, Basic, SQL, MySQL, HTML, PHP, Python, Java, Javascript, etc.

Although the terms first, second, etc. may be used herein to describe various elements, these elements should not be limited by these terms. These terms are only used to distinguish one element from another. For example, a first element could be termed a second element, and similarly, a second element could be termed a first element, without departing from the scope of this disclosure. As used herein, the term "and/or," includes any and all combinations of one or more of the associated listed items.

When an element is referred to as being "connected," or "coupled," to another element, it can be directly connected or coupled to the other element or intervening elements may be present. By contrast, when an element is referred to as being "directly connected," or "directly coupled," to another element, there are no intervening elements present. Other words used to describe the relationship between elements should be interpreted in a like fashion (e.g., "between," versus "directly between," "adjacent," versus "directly adjacent," etc.).

The terminology used herein is for the purpose of describing particular embodiments only and is not intended to be limiting. As used herein, the singular forms "a," "an," and "the," are intended to include the plural forms as well, unless the context clearly indicates otherwise. It will be further understood that the terms "comprises," "comprising," "includes," and/or "including," when used herein, specify the presence of stated features, integers, steps, operations, elements, and/or components, but do not preclude the presence or addition of one or more other features, integers, steps, operations, elements, components, and/or groups thereof.

While aspects of the present disclosure have been particularly shown and described with reference to the embodiments above, it will be understood by those skilled in the art that various additional embodiments may be contemplated by the modification of the disclosed machines, systems and methods without departing from the scope of what is disclosed. Such embodiments should be understood to fall within the scope of the present disclosure as determined based upon the claims and any equivalents thereof.

## Claims

1. An apparatus comprising
- means for executing a training application (TrApp) configured to train (350, 450) at least one Artificial Intelligence, AI / Machine Learning, ML, based model;
- means for sending (320A, 320B, 320C, 320D, 420) to a license management function (LiMnF) in a network a request (R1) for acquiring a license for accessing operator data generated by one or more network entities in the network;
- means for receiving (325A, 325B, 325C, 325D, 425) from the license management function (LiMnF) in response to the request (R1) for acquiring a license at least one license credential, wherein the license credential identifies operator data to which the training application (TrApp) is allowed to access;
- means for sending (340A, 340B, 340C, 330D, 440) at least one request (R3) for accessing operator data, the at least one request for accessing operator data including the license credential;
- means for receiving (345A, 345B, 345C, 335D, 445) in response to the at least one request (R3) for accessing operator data the operator data to which the training application (TrApp) is allowed to access;
wherein the means for executing the training application (TrApp) are configured to train (350A, 350B, 350C, 350D, 360) the at least one AI/ML based model using the received operator data.

2. The apparatus according to claim 1, wherein the license credential includes information on a period of validity of the license.

3. The apparatus according to claim 1 or 2, wherein the license credential includes at least one identifier of a target data object instance to which the training application is allowed to access.

4. The apparatus according to claim 3, wherein the license credential includes at least one identifier of a target attribute of the target data object instance to which the training application is allowed to access.

5. The apparatus according to any of the preceding claims, wherein the at least one request (R3) for accessing operator data includes authentication data to allow the authentication of the training application (TrAPP) by the data management function (DaMnF).

6. The apparatus according to any of the preceding claims, wherein the request (R1) for acquiring a license includes at least one identifier of a target data object instance to which the training application is requesting access and the license credential includes at least one identifier of a target data object instance to which the training application is allowed to access.

7. The apparatus according to claim 6, wherein the request (R1) for acquiring a license includes at least one identifier of a target attribute of the data object instance to which the training application is requesting access and the license credential includes at least one identifier of a target attribute of the data object instance to which the training application is allowed to access.

8. The apparatus according to any claims 1 to 7, further comprising
- means for sending, to a repository in the network, a request (R2) for data source identifier, wherein the request (R2) for data source identifier includes at least one identifier of a target data object instance and / or at least one identifier of a target attribute of the data object instance to which the training application is requesting access;
- means for receiving, from the repository in response to request (R2) for data source identifier, at least one data source identifier that provides access to the operator data;

9. The apparatus according to any claims 1 to 7, further comprising
- means for receiving from the license management function (LiMnF) at least one data source identifier that provides access to the operator data.

10. The apparatus according to any of the preceding claims, further comprising means for sending to the license management function (LiMnF) in a network a message for license update after receipt of the operator data to which the training application is allowed to access.

11. A method comprising
- executing a training application (TrApp) configured to train (350, 450) at least one Artificial Intelligence, AI / Machine Learning, ML, based model;
- sending (320A, 320B, 320C, 320D, 420) to a license management function (LiMnF) in a network a request (R1) for acquiring a license for accessing operator data generated by one or more network entities in the network;
- receiving (325A, 325B, 325C, 325D, 425), from the license management function (LiMnF) in response to the request (R1) for acquiring a license, at least one license credential, wherein the license credential identifies operator data to which the training application (TrApp) is allowed to access;
- sending (340A, 340B, 340C, 330D, 440) at least one request (R3) for accessing operator data, the at least one request for accessing operator data including the at least one license credential;
- receiving (345A, 345B, 345C, 335D, 445) in response to the at least one request (R3) for accessing operator data the operator data to which the training application (TrApp) is allowed to access;
- training (350A, 350B, 350C, 350D, 450) the at least one AI/ML based model by the training application (TrApp) using received operator data.

12. An apparatus comprising
- means for receiving (320A, 320B, 320C, 320D, 420), by a license management function (LiMnF) in a network and from a training application (TrApp) configured to train (350, 450) at least one Artificial Intelligence, AI / Machine Learning, ML, based model, a request (R1) for acquiring a license for accessing operator data generated by one or more network entities in the network;
- means for sending (325A, 325B, 325C, 325D, 425), by the license management function (LiMnF) in response to the request (R1) for acquiring a license, at least one license credential, wherein the license credential identifies operator data to which the training application (TrApp) is allowed to access.

13. A method comprising
- receiving (320A, 320B, 320C, 320D, 420), by a license management function (LiMnF) in a network and from a training application (TrApp) configured to train (350, 450) at least one Artificial Intelligence, AI / Machine Learning, ML, based model, a request (R1) for acquiring a license for accessing operator data generated by one or more network entities in the network;
- sending (325A, 325B, 325C, 325D, 425), by the license management function (LiMnF) in response to the request (R1) for acquiring a license, at least one license credential, wherein the license credential identifies operator data to which the training application (TrApp) is allowed to access.

14. An apparatus comprising
- means for receiving (340A, 340B, 340C, 330D, 440), by a data management function (DaMnF) in a network and from a training application (TrApp) configured to train (350, 450) at least one Artificial Intelligence, AI / Machine Learning, ML, based model, at least one request (R3) for accessing operator data generated by one or more network entities in the network, the at least one request for accessing operator data including at least one license credential, wherein the license credential identifies operator data to which the training application (TrApp) is allowed to access;
- means for sending (345A, 345B, 345C, 335D, 445), by the data management function (DaMnF) in response to the at least one request (R3) for accessing operator data, the operator data to which the training application (TrApp) is allowed to access.

15. A method comprising
- receiving (340A, 340B, 340C, 330D, 440), by a data management function (DaMnF) in a network and from a training application (TrApp) configured to train (350, 450) at least one Artificial Intelligence, AI / Machine Learning, ML, based model, at least one request (R3) for accessing operator data generated by one or more network entities in the network, the at least one request for accessing operator data including at least one license credential, wherein the license credential identifies operator data to which the training application (TrApp) is allowed to access;
- sending (345A, 345B, 345C, 335D, 445), by the data management function (DaMnF) in response to the at least one request (R3) for accessing operator data, the operator data to which the training application (TrApp) is allowed to access.
